Europäisches Patentamt

European Patent Office

Office européen des brevets

(19)

(11) Numéro de publication: **0 046 424
B1**

(12) **FASCICULE DE BREVET EUROPEEN**

(45) Date de publication du fascicule du brevet:
27.06.84

(51) Int. Cl.³: **F 16 M 11/12**

(21) Numéro de dépôt: 81401253.0

(22) Date de dépôt: 03.08.81

(54) **Plateforme perfectionnée de pied photographique ou cinématographique.**

(30) Priorité: 19.08.80 FR 8018140

(43) Date de publication de la demande:
24.02.82 Bulletin 82/8

(45) Mention de la délivrance du brevet:
27.06.84 Bulletin 84/26

(84) Etats contractants désignés:
BE CH DE GB LI NL

(56) Documents cités:
CH - A - 512 677
FR - A - 1 114 322
FR - A - 2 439 932
GB - A - 1 521 230

(73) Titulaire: **GEFITEC S.A., Avenue de la Gare, 5 Case
postale 452, CH-1001 Lausanne 1 (CH)**

(72) Inventeur: **Posso, Patrick, 10 Avenue Jurigoz,
CH-1006 Lausanne (CH)**

(74) Mandataire: **Caunet, Jean et al, Cabinet BEAU DE
LOMENIE 55, rue d'Amsterdam, F-75008 Paris (FR)**

BUNDESDRUCKEREI BERLIN

## Description

La présente invention concerne des perfectionnements apportés aux plateformes tournantes et inclinables pour pieds photographiques ou cinématographiques.

On connaît déjà une telle platforme correspondant au préambule de la revendication 1 (FR-A-2 439 932).

Cette plateforme connue comporte une tourelle montée tournante autour d'un axe vertical par rapport à un piètement repliable et supportant la plaque inférieure d'une platine dont la plaque supérieure est prévue pour l'appui et la fixation de l'appareil de prise de vues, ces deux plaques étant articulées l'une sur l'autre au moyen d'un axe horizontal. La plaque inférieure de la platine est reliée au plateau mobile de la tourelle par un arbre horizontal, orthogonal à l'axe précédent, qui est accouplé à un élément saillant de ladite plaque et traverse de façon tournante un élément saillant correspondant dudit plateau. Un manchon fendu enfilé sur une extrémité saillante de l'arbre est serré sur celui-ci dans la position angulaire choisie au moyen d'une poignée de commande épaulée et vissée. Par ailleurs, l'extrémité libre opposée de l'arbre est filetée et coopère avec une manette taraudée de blocage qui permet de durcir plus ou moins la mobilité de la platine relativement au plateau de la tourelle, voire de la bloquer. La poignée de commande permet, lorsqu'elle est solidarisée avec l'arbre, de manoeuvrer la plateforme pour incliner la platine et/ou orienter la tourelle dans n'importe quelle direction en vue de réaliser une visée fixe après blocage de la manette précitée et des autres non décrites dont celle de ladite tourelle, ou de procéder à une prise de vue mobile. De plus, cette poignée étant réglable, il est très facile de la positionner suivant la présentation qui est la plus commode à l'utilisateur pour effectuer cette prise de vue et d'adapter ce positionnement à un gaucher ou un droitier.

Cependant, ce dispositif à manchon fendu présente l'inconvénient de pouvoir se desserrer de sorte que la platine chargée de l'appareil de prise de vues peut se soustraire à la commande transmise par la poignée; il en résulte alors que cet appareil peut basculer et se détériorer ou bien, si le desserrage est modéré, que ledit appareil ne suit pas la trajectoire de visée commandée par la main de l'opérateur.

La présente invention a pour but de remédier à cet inconvénient tout en conservant les avantages précités de réglage et d'adaptation de la poignée.

A cet effet l'invention prévoit une roue de crabot solidaire de l'élément saillant de la platine coopère avec la roue conjugée du crabot qui est solidaire du manchon fendu, lequel est monté coulissant sur l'arbre et repoussé pour l'engrènement des dentures de ces roues par un organe élastique prenant appui sur une partie épaulée dudit arbre.

En outre, pour faciliter la manoeuvre d'orientation bidirectionnelle de la platine tout en permettant le rangement sous encombrement minimal de la plateforme et en garantissant toujours une commande positive de ladite platine c'est-à-dire sans aucun risque de désolidarisation inopinée, la poignée de commande traverse les deux branches du manchon fendu et coopère, par son extrémité libre filetée, avec un écrou cylindrique monté pivotant dans l'une des branches et, par une collerette épaulée, avec l'un quelconque de deux sièges d'appui formés en dièdre sur l'autre branche du manchon pour définir deux positions angulaires particulières de cette poignée, laquelle tranverse alors une lumière oblongue conique ménagée dans ledites deux branches.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:

— la fig. 1 est une élévation partie en coupe, montrant la plateforme perfectionnée, selon l'invention, dans la position d'accouplement positif.
— la fig. 2 est une vue analogue à la fig. 1, mais dont la partie coupée est plus étendue, cette vue illustrant la position de désaccouplement.
— la fig. 3 est une coupe prise, à plus grande échelle, suivant la ligne III-III de la fig. 1 pour faire ressortir le montage particulier de la poignée de commande.
— la fig. 4 est une perspective en vue synoptique et en partie arrachée, représentant la plateforme ainsi perfectionnée.

La plateforme comporte une tourelle 1 dont le siège fixe 2 est muni d'un piètement repliable, non représenté, et supporte un plateau 3 susceptible de tourner autour d'un axe vertical. La plateforme comporte également une platine 4 constituée par deux plaques 5 et 6 articulées l'une sur l'autre au moyen d'un axe horizontal 7. La plaque supérieure 5 est destinée au montage d'un appareil de prise de vues et permet son inclinaison latérale si l'on considère la position illustrée par le dessin. La plaque inférieure 6 est supportée par le plateau 3 mais de façon à pouvoir pivoter dans la direction antéro postérieure autour d'un axe horizontal.

Ce dernier axe horizontal est celui d'un arbre 8 qui présente, entre son extrémité filetée 9 et son extrémité épaulée 10, une partie cannelée 11 faiblement saillante de solidarisation. La plaque inférieure 6 est solidaire d'une chape dont les ailes 12 et 13 sont disposées de part et d'autre d'une patte 14 surmontant le plateau 3. La partie cannelée 11 est emmanchée à force dans l'aile 12, tandis que la partie restante 15 de l'arbre est libre de tourner dans la patte 14. Ainsi, ledit arbre 8 pivote, autour de son axe horizontal, solidairement avec la platine, mais ce pivotement peut être durci, voire bloqué, grâce à une manette 16 dont la tête taraudée 17 est vissée sur l'extrémité filetée 9 de l'arbre 8, avec interposition éventuelle de rondelles déformables élastiquement et/ou de rondelles de friction; ainsi, en vissant plus ou moins la manette, on règle la mobilité de la platine et on peut même la bloquer dans n'importe quelle position.

Suivant l'invention, un manchon fendu 18 est monté tournant et coulissant sur la partie saillante 19 de l'arbre. Le manchon est susceptible d'être accouplé à la platine par un crabot grâce auquel n'importe quelle position angulaire d'accouplement peut être obtenue; une roue dentée extérieurement 20 du crabot est venue de moulage en saillie sur la face latérale apparente de l'aile 12 de la platine; une roue dentée intérieurement 21 du crabot, conjuguée à la précédente, est venue de moulage en saillie dans une collerette faciale du manchon. Par ailleurs, les dentures 20 et 21 sont maintenues élastiquement en prise au moyen d'un ressort 22 enfilé sur l'arbre 8 et interposé entre le fond 23 d'un chambrage 24 ménagé en bout dans le manchon, d'une part, et une rondelle étoilée 25 agrippée sur l'extrémité épaulée 10 de l'arbre. Le chambrage 24 dans lequel le système élastique se trouve logé est fermé par un couvercle 26.

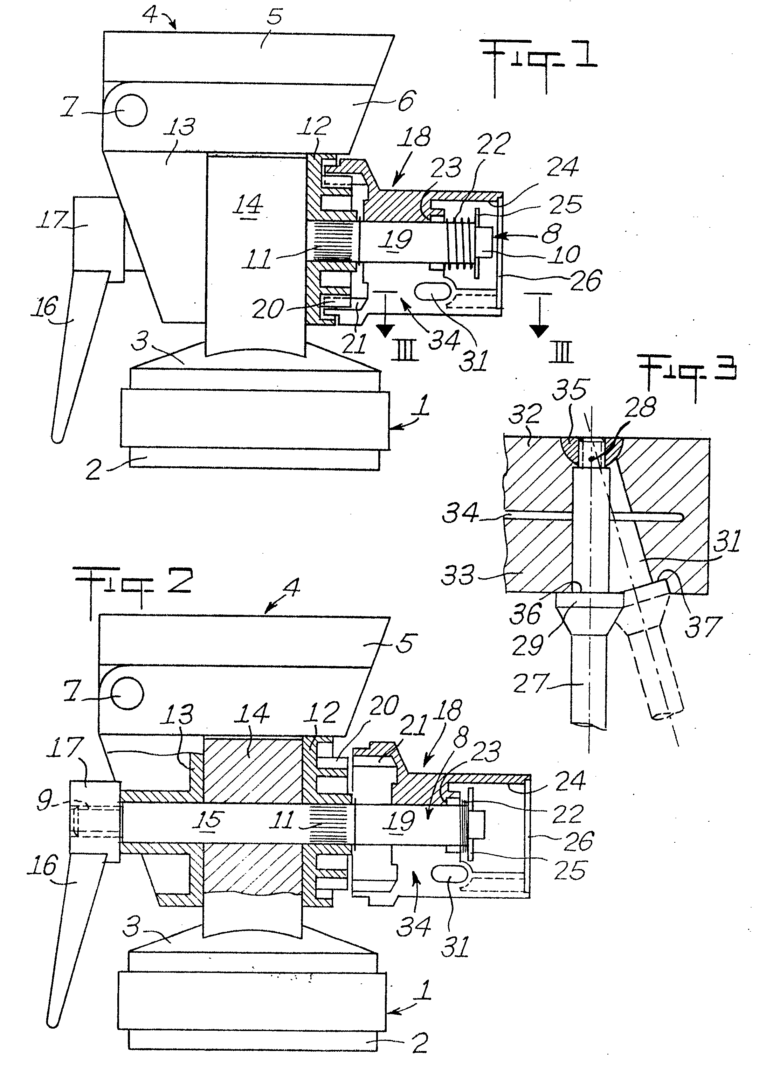

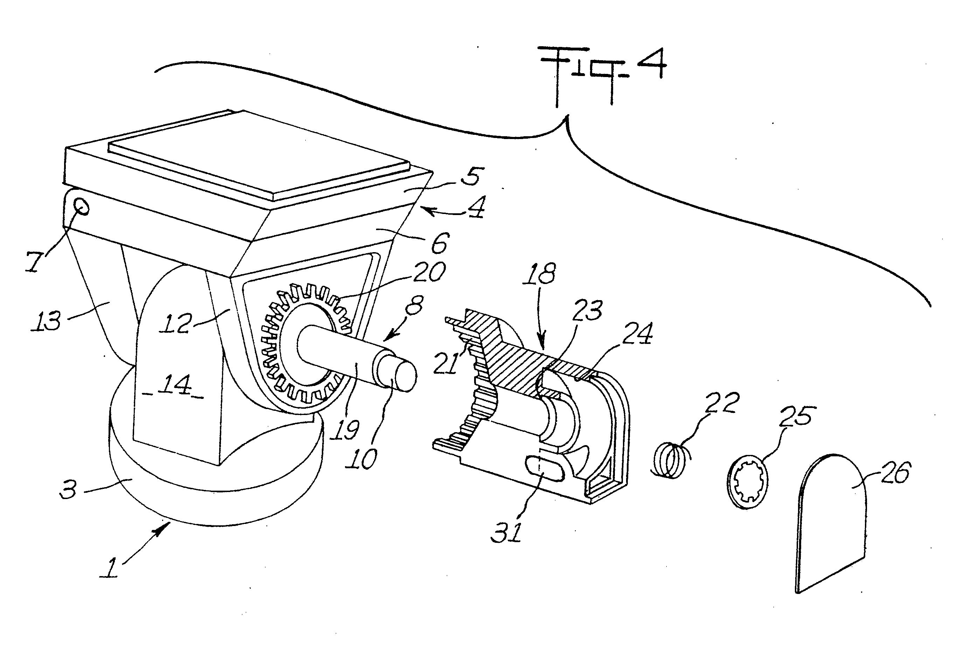

Dans la position illustrée par la fig. 1, le ressort 22 est en détente et assure la prise du crabot par engrènement de ses dentures 20 et 21; par contre, dans la position représentée sur la fig. 2, le ressort 22 est comprimé et lesdites dentures étant écartées l'une de l'autre, sont désaccouplées.

Une poignée de commande 27 est également prévue, non seulement pour serrer le manchon 18 sur l'arbre dans la position de prise du crabot, mais également pour pouvoir manoeuvrer l'appareil de prise de vues en faisant pivoter la platine aussi bien autour de l'axe vertical de la tourelle que de l'axe horizontal de l'arbre. Le desserrage du manchon accompagné du désaccouplement du crabot permet de choisir la position angulaire de la poignée qui convient à la manoeuvre envisagée, que l'opérateur soit droitier ou gaucher.

La poignée 27 présente une extrémité filetée 28 et une collerette épaulée 29, entre lesquelles s'étend une tige 30 destinée à traverser une lumière oblongue conique 31 ménagée dans les deux branches 32 et 33 du manchon 18 de part et d'autre de la fente 34 qui les sépare. L'extrémité filetée 28 coopère avec un écrou cylindrique 35 monté pivotant dans la branche 32 dans la zone de convergence de la lumière 31. La collerette 29 bute sélectivement contre l'un quelconque de deux sièges d'appui 36 et 37 s'étendant en dièdre et définissant deux positions angulaires particulières de la poignée. Dans une position, correspondant au siège 36 qui est sensiblement parallèle aux axes de rotation, la poignée se trouve rabattue contre le piètement replié et occupe l'encombrement minimal. Dans l'autre position correspondant au siège pentu 37, la poignée est inclinée latéralement et se présente dans la meilleure orientation de manoeuvre.

L'invention n'est pas limitée à la forme de réalisation représentée et décrite en détail car diverses modifications peuvent y être apportées sans sortir de son cadre.

## Revendications

1. Plateforme perfectionnée de pied photographique ou cimématographique comportant une tourelle (1) montée tournante autour d'un axe vertical par rapport à un piètement repliable et supportant une platine (4) pour la fixation de l'appareil de prise de vues, ladite platine (4) présentant un élément saillant (12) solidaire d'un arbre (8) montée tournant autour d'un axe horizontal par rapport à un élément saillant (14) correspondant sur le plateau mobile (3) de la tourelle, une poignée de commande (27) étant vissée sur un manchon fendu (18) pour le serrer sur l'arbre (8), la plateforme étant caractérisée en ce qu'une roue de crabot (20) solidaire de l'élément saillant (12) de la platine coopère avec la roue conjuguée (21) du crabot qui est solidaire du manchon fendu (18), lequel est monté coulissant sur l'arbre (8) et repoussé pour l'engrènement des dentures de ces roues par un organe élastique (22) prenant appui sur une partie épaulée (10) dudit arbre (8).

2. Plateforme selon la revendication 1, caractérisée en ce que pour maintenir positivement en prise les deux roues de crabot (20, 21), la poignée de commande (27) traverse les deux branches (32, 33) du manchon fendu (18) et coopère, par son extrémité libre filetée (28), avec un écrou cylindrique (35) monté pivotant dans l'une des branches et, par une collerette épaulée (29), avec l'un quelconque de deux sièges d'appui formés en dièdre sur l'autre branche du manchon pour définir deux positions angulaires particulières de cette poignée (27), laquelle traverse alors une lumière oblongue conique (31) ménagée dans lesdites deux branches (32, 33).

## Patentansprüche

1. Verbesserte Foto- oder Filmstativplattform mit einem gegenüber einem zusammenklappbaren und eine Halteplatte (4) zur Befestigung des Aufnahmeapparates aufweisenden Fuß um eine vertikale Achse drehbar gelagerten Aufbau (1), wobei eine Platte (4) ein vorspringendes Element (12) aufweist, das mit einer gegenüber einem korrespondierenden vorspringenden Element (14) auf der beweglichen Platte (3) des Aufbaus um eine horizontale Achse drehbar gelagerten Welle (8) verbunden ist, wobei ein Steuergriff (27) auf einer geschlitzten Muffe (18) aufgeschraubt ist zum Festklemmen derselben auf der Welle (8), welche Plattform dadurch gekennzeichnet ist, daß ein am vorspringenden Element (12) der Halteplatte befindliches Rad (20) einer Klauenkupplung mit dem an der geschlitzten Muffe (18) befindlichen Gegenrad (21) der Klauenkupplung zusammenwirkt, welche Muffe gleitend auf der Welle (8) gelagert ist und zum Eingreifen der Zähne dieser Räder durch ein elastisches, sich auf einem Schulterteil (10) der Welle (8) abstützendes Organ (22) zurückgedrückt ist.

2. Plattform nach Anspruch 1, dadurch gekennzeichnet, daß zum formschlüssigen Ineingriffhalten der beiden Kupplungsräder (20, 21) der Steuergriff (27) die zwei Schenkel (32, 33) der geschlitzten Muffe (18) durchsetzt und an seinem freien, mit Gewinde versehenen Ende (28) mit einer zylindrischen, schwenkbar in einem der Schenkel gelagerten Mutter (35) und über einen Schulterflansch (29) mit einem der beiden V-förmig auf dem anderen Schenkel der Muffe gebildeten Stützsitze zusammenwirkt, um zwei spezielle Winkelpositionen dieses Griffs (27) festzulegen, welcher dabei ein in den beiden Schenkeln (32, 33) vorgesehenes konisches Langloch (31) durchsetzt.

## Claims

1. Improved platform for photographic or cinematographic stand comprising a turrent (1) mounted for rotating about a vertical axle with respect to a folding mounting and supporting a plate (4) for fixing the shooting apparatus, said plate (4) having a projecting element (12) integral with a shaft (8) mounted for rotating about a horizontal axle with respect to a corresponding projecting element (14), of the movable plate (3) of the turret, a control handle (27) being screwed on a split sleeve (18) to fix the latter on the shaft (8), said platform being characterized in that a dog wheel (20) together with the projecting element (12) of the plate cooperates with the interconnected wheel of the dog which forms part of the split sleeve (18), the latter being mounted for sliding on the shaft (8) and pushed back to engage the wheels' teeth via an elastic member (22) resting on a shouldered part (10) of said shaft (8).

2. Platform according to claim 1, characterized in that in order to positively keep the two wheels of the dog (20, 21) in engagement the control handle (27) traverses the two branches (32, 33) of the split sleeve (18) and cooperates, by its free threaded end (28), with a cylindrical nut (35) mounted for pivoting in one of the branches and, by a shouldered flange (29), with any one of the two support seats forming a dihedron angle with the other branch of the sleeve to define two particular angular positions of the handle (27), which then traverses a conical oblong opening (31) provided in said branches (32, 33).

Fig.1

Fig.2

Fig.3

Fig.4